# FASCICULE DE BREVET EUROPEEN

(11) **EP 2 461 143 B1**
(45) Date de publication et mention de la délivrance du brevet: **15.03.2017**
(21) Numéro de dépôt: 11306559.3
(22) Date de dépôt: 25.11.2011
(51) Int. Cl.: G01J 5/06

(54) **Détecteur de rayonnement infrarouge**
Infrarotdetektor
Detector of infrared radiation

(30) Priorité: 02.12.2010 FR 1059996
(43) Date de publication de la demande: 06.06.2012
(73) Titulaire: Société Française de Détecteurs Infrarouges - SOFRADIR, 92290 Châtenay Malabry (FR)
(72) Inventeur: Orlach, Bertrand, 38340 Voreppe (FR)
(74) Mandataire: Cabinet Laurent & Charras

(56) Documents cités:
- FR-A1- 2 913 768
- US-A- 5 994 702
- US-A1- 2010 264 252

## Description

### DOMAINE DE L'INVENTION

L'invention a trait au domaine des détecteurs infrarouge, plus particulièrement ceux fonctionnant à basse température, c'est-à-dire typiquement à des températures comprises entre 50 et 200 Kelvin (K).

De tels détecteurs infrarouge basse température, fonctionnant selon une physique quantique, sont généralement associés à une enceinte cryostatique (cryostat) sous vide. Le détecteur proprement dit est constitué d'une pluralité de détecteurs unitaires ou élémentaires, dénommés photosites, associés à un circuit de lecture, l'ensemble, communément appelé « *bloc de détection* », étant fixé mécaniquement et en échange thermique avec le doigt froid du cryostat, de telle sorte à porter ledit détecteur à la température souhaitée.

Ces dispositifs comportent généralement un écran froid ouvert à son sommet, ladite ouverture définissant un diaphragme de champ, et ce afin de limiter les réflexions parasites générées notamment par le rayonnement dit « *inutile* », après que ledit rayonnement ait subi des réflexions et/ou des réfractions sur et dans les matériaux du circuit de détection et/ou circuit d'exploitation. De tels rayonnements génèrent, lorsqu'ils atteignent les photosites, des signaux électriques incohérents, pénalisant de fait les performances électro-optiques du système qui, en l'absence de tels rayonnements parasites, approcheraient la précision théorique.

Plus particulièrement, et notamment dans le cadre de la détection de rayonnements infrarouge de faibles signaux, on cherche à s'affranchir du bruit provenant justement du flux infrarouge parasite hors champ de vision, qui se réfléchit sur les éléments internes du cryostat.

### ETAT DE LA TECHNIQUE

Afin de surmonter cette difficulté, et donc de minimiser ce flux parasite, on a par exemple proposé de recouvrir certains composants internes au cryostat d'un matériau absorbant les longueurs d'ondes du rayonnement infrarouge parasite, et ce pour des angles d'incidence les plus importants possibles par rapport à la normale à la surface du détecteur.

On a également proposé de rapporter, au niveau de la face interne de l'écran froid, un certain nombre de baffles dirigés radialement, ayant pour fonction de stopper ou de réfléchir en direction de l'extérieur, les rayons incidents selon une direction autre que celle du champ de vision nominal du détecteur.

L'inconvénient de ces baffles réside dans le fait qu'ils sont rapportés sur la face interne de l'écran froid par collage, notamment au moyen d'une résine époxy. Outre le fait que cette opération de fixation des baffles est longue et fastidieuse à mettre en oeuvre, surenchérissant les coûts de réalisation d'un tel détecteur, l'expérience démontre que la résine époxy, mise en oeuvre pour assurer ce collage, induit un dégazage affectant, à plus ou moins court terme, l'efficacité du détecteur généralement placé sous vide.

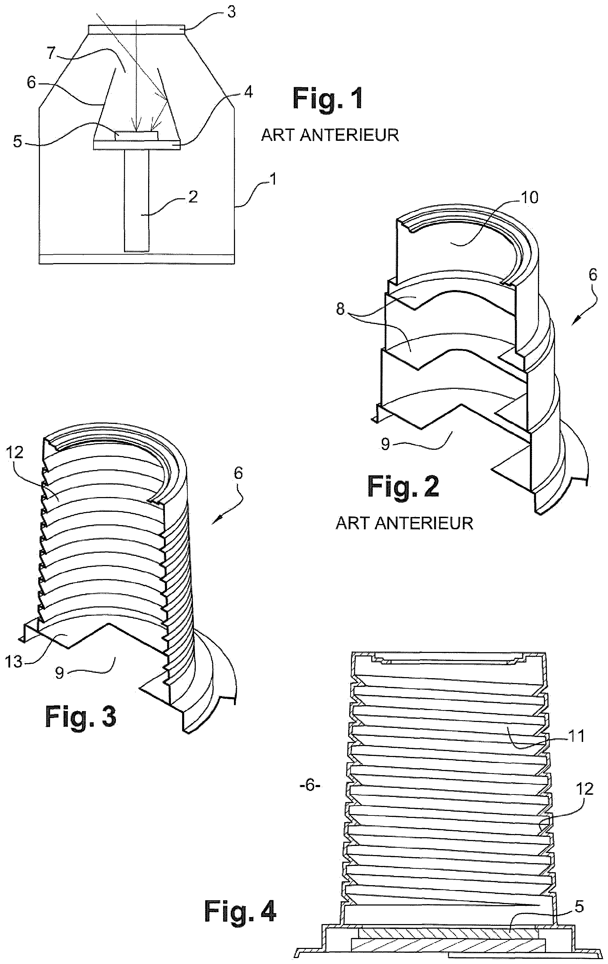

On a schématiquement représenté en relation avec la figure 1, un détecteur infrarouge quantique, c'est-à-dire appelé à fonctionner à basse température, d'un type en soi connu.

Fondamentalement, celui-ci comporte un cryostat ou enceinte **1**, dont le doigt froid **2** est relié à une source froide (non représentée). Ce cryostat est obturé en zone supérieure par une fenêtre **3** transparente au rayonnement infrarouge à détecter.

A l'extrémité supérieure du doigt froid **2** du cryostat **1**, est fixé mécaniquement un plan froid **4**, par ailleurs en échange thermique avec le doigt froid **2**. On a matérialisé par la référence **5** le bloc détecteur infrarouge, lui-même en échange thermique avec le plan froid **4**. Ce bloc détecteur est typiquement constitué d'une pluralité de détecteurs élémentaires, associés à un circuit d'exploitation, propre à convertir les signaux émanant de ces détecteurs en signaux électriques exploitables. L'information en résultant est acheminée à l'extérieur du cryostat par des connexions, notamment filaires, non représentées afin de ne pas inutilement charger la figure.

Est également rapporté sur ce plan froid **4**, un écran froid **6**, comportant également une ouverture **7** située au regard de la fenêtre **3** transparente au rayonnement infrarouge à détecter, ménagée à l'extrémité supérieure du cryostat. Cette ouverture **7** fait fonction de diaphragme de champ.

On a matérialisé sur ce schéma, d'une part, par une flèche sensiblement perpendiculaire au bloc de détection **5**, le rayonnement infrarouge utile situé dans le champ de vision du détecteur, et d'autre part, par une flèche oblique venant se réfléchir sur la paroi latérale de l'écran froid **6** le rayonnement parasite hors champ de vision et dont on souhaite s'affranchir.

On a illustré en relation avec la figure 2, un écran froid de l'état antérieur de la technique, mettant en oeuvre des baffles radiaux **8**. Ces baffles métalliques, et en général de même nature que l'écran froid, sont parallèles les uns aux autres, et sont rapportés contre la face interne **10** de l'écran froid. Ce dernier est du type à symétrie de révolution. Il définit une surface **9** à sa base correspondant sensiblement à la surface utile du détecteur, c'est-à-dire, de la surface de matériau sensible au rayonnement infrarouge à détecter.

D'autres exemples de l'état de la technique sont décrits dans les documents de brevet FR2913768, US20100264252 et US5994702.

### BREF EXPOSE DE L'INVENTION

La présente invention vise à s'affranchir de la mise en oeuvre de tels baffles, et à tout le moins, d'en réduire le nombre. Elle s'inscrit cependant dans la technologie du type précité, c'est-à-dire tendant à s'affranchir de rayonnement parasite par réflexion dudit rayonnement hors du champ de vision des détecteurs élémentaires ou des photosites.

A cet effet, elle vise un détecteur de rayonnement infrarouge comprenant :
- un cryostat, muni d'un doigt froid, apte à assurer l'échange thermique avec une source froide, et d'une fenêtre transparente au rayonnement infrarouge à détecter ;
- un plan froid fixé mécaniquement et en échange thermique avec le doigt froid ;
- un bloc de détection comprenant au moins un circuit de détection sensible à la gamme de longueurs d'onde infrarouge à détecter et en échange thermique directement ou indirectement avec le plan froid ;
- un écran froid fixé mécaniquement et en échange thermique avec le plan froid, et apte à limiter les rayonnements parasites, ledit écran froid présentant un axe de révolution.

Selon l'invention, la paroi interne définissant l'écran froid présente une succession de reliefs répartis selon un hélicoïde dont l'axe est confondu avec l'axe de définition est confondu avec l'axe de révolution de l'écran.

En d'autres termes, l'invention consiste à munir la paroi interne de l'écran froid d'un profil particulier, apte à induire la réflexion du rayonnement parasite hors du champ de vision du détecteur, et faisant partie intégrante de la paroi définissant ledit écran froid, c'est-à-dire s'affranchissant de la fixation par tous moyens d'éléments supplémentaires propres à assurer la fonction remplie par les baffles dans les détecteurs de l'état antérieur de la technique.

Le profil particulier de la paroi, à tout le moins interne, de l'écran froid, présente une arête non perpendiculaire à la direction principale du flux incident, c'est-à-dire du rayonnement utile, et ce dans l'objectif de réfléchir le maximum, pour ne pas dire la totalité des rayons parasites.

Le pas de l'hélicoïde peut être constant ou variable. En outre, il peut être prévu deux, voire plus de deux hélicoïdes.

Selon l'invention, l'écran froid est réalisé par électrodéposition de nickel ou de cuivre sur une matrice propre à définir le profil recherché.

Les dimensions et le diamètre de l'écran sont déterminés en fonction de la diagonale du composant de détection du photosite ou de la pluralité de photosites et de l'angle de vue souhaité.

### BREVE DESCRIPTION DES FIGURES

La manière dont l'invention peut être réalisée et les avantages qui en découlent, ressortiront mieux de l'exemple de réalisation qui suit, donné à titre indicatif et non limitatif, à l'appui des figures annexées.
La figure 1 est une vue schématique d'un détecteur infrarouge conforme d'un type en soi connu.
La figure 2 est une représentation schématique en perspective partielle d'un écran froid, conforme à l'état antérieur de la technique.
La figure 3 est une vue schématique en perspective partielle d'un écran froid conforme à l'invention.
La figure 4 est une vue en section longitudinale de l'écran froid de la figure 3.
La figure 5 est une vue schématique en section longitudinale de l'écran froid de l'invention, illustrant un pas variable de l'hélicoïde, plus important au niveau de la base qu'au niveau du diaphragme de champ.
La figure 6 est également une vue schématique en section longitudinale de l'écran froid de l'invention, mais avec un pas constant de l'hélicoïde, et illustrant le trajet optique de certains rayons incidents.
La figure 7 est une vue schématique en perspective de l'écran froid de l'invention, également avec un pas constant de l'hélicoïde.

### DESCRIPTION DETAILLEE DE L'INVENTION

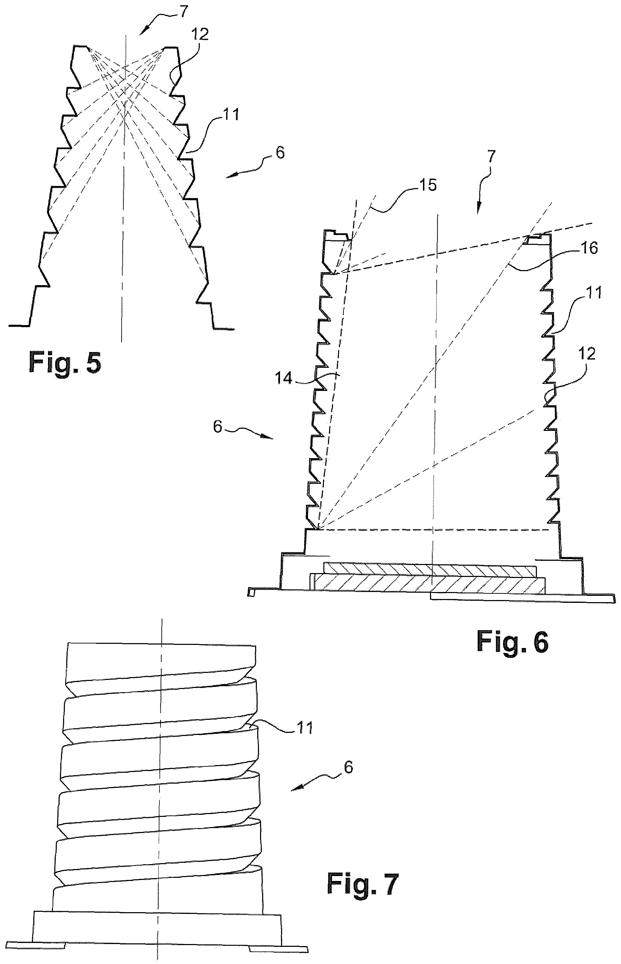

On a représenté, en relation avec les figures 3, 4 et 6, le principe général sous-tendant l'invention. Ainsi donc, l'écran froid **6**, présente une forme de révolution, et en l'espèce de forme tronconique, le tronc de cône constituant l'enveloppe dudit écran étant défini par rapport à un axe de révolution que l'on a matérialisé en traits discontinues sur les figures 5 à 7.

L'écran froid **6** est constitué d'un support métallique réalisé à base d'alliage de nickel ou de cuivre, dont la paroi latérale le définissant présente un profil particulier. Ce profil particulier résulte d'un hélicoïde, dont l'axe de définition est confondu avec l'axe de révolution de l'écran.

Le pas de l'hélicoïde peut être variable, comme illustré sur la figure 5, et ce, dans l'objectif de diminuer la masse de l'écran, et corolairement d'optimiser sa résistance mécanique.

Il peut cependant être constant, comme illustré sur les figures 3, 4, 6 et 7.

Alors même que cela n'a pas été représenté, on peut même prévoir deux hélicoïdes, voire plusieurs, pour optimiser la densité de réflexion potentielle du profil particulier généré.

On peut observer notamment en figures 5 et 6, que cet hélicoïde **11** définit au niveau de la paroi latérale interne **10** des surfaces de réflexion **12** non perpendiculaires à la direction principale du rayonnement utile. Ce faisant, on optimise de manière significative la réflexion des rayonnements parasites **14**, **15**, **16**, et corolairement, les performances électro-optiques du dispositif.

Selon l'invention, cet écran froid est obtenu par la technologie dite de l'électrodéposition, dont la base est une matrice, par exemple réalisée en alliage à base d'aluminium, présentant le profil recherché pour l'écran.

Ce faisant, on obtient par une technologie aujourd'hui bien maîtrisée, en l'espèce par électrodéposition, un écran froid pourvu de propriétés optimisées de réflexion des rayonnements parasites, sans nécessiter une quelconque adjonction ou fixation d'éléments supplémentaires tels que des baffles, permettant dès lors de réduire très significativement les opérations de réalisation de l'écran et corollairement son coût de fabrication. Dans la forme de réalisation décrite en relation avec la figure 3, le baffle inférieur **13** a été conservé. Il peut cependant parfaitement être envisagé de le supprimer.

En outre, en raison de l'absence de toute mise en oeuvre de colle de quelque nature que ce soit, et notamment de résine époxy (sauf en cas de conservation du baffle inférieur **13**), on s'affranchit des risques de dégazage, obérant de manière connue la longévité d'un tel détecteur.

## Revendications

1. Détecteur de rayonnement infrarouge comprenant :
- un cryostat (1), muni d'un doigt froid (2), apte à assurer l'échange thermique avec une source froide, et d'une fenêtre (3) transparente au rayonnement infrarouge à détecter ;
- un plan froid (4) fixé mécaniquement et en échange thermique avec le doigt froid (2) ;
- un bloc de détection (5) comprenant au moins un circuit de détection sensible à la gamme de longueurs d'onde infrarouge à détecter et en échange thermique directement ou indirectement avec le plan froid (4) ;
- un écran froid (6), fixé mécaniquement et en échange thermique avec le plan froid (4), et apte à limiter les rayonnements parasites, et présentant un axe de révolution ;
***caractérisé* en ce que** la paroi interne (10) définissant l'écran froid (6) présente une succession de reliefs (12) répartis selon au moins un hélicoïde (11), dont l'axe de définition est confondu avec l'axe de révolution de l'écran froid (6).

2. Détecteur de rayonnement infrarouge selon la revendication 1, ***caractérisé* en ce que** chacun des reliefs (12) présente une arête non perpendiculaire à la direction dudit axe de révolution.

3. Détecteur de rayonnement infrarouge selon l'une des revendications 1 et 2, ***caractérisé* en ce que** le pas du ou des hélicoïdes (11) est constant ou variable.

4. Détecteur de rayonnement infrarouge selon l'une des revendications 1 à 3, ***caractérisé* en ce que** l'écran froid (6) est réalisé par électrodéposition de nickel ou de cuivre sur une matrice propre à définir le profil recherché.

## Patentansprüche

1. Infrarotdetektor umfassend:
- einen Kryostaten (1), der mit einem Kaltfinger (2), der in der Lage ist, den Wärmeaustausch mit einer Kältequelle zu gewährleisten, und ein für die zu erkennende Infrarotstrahlung durchlässiges Fenster (3) ausgerüstet ist;
- ein Kältefeld (4), das mechanisch befestigt ist und in Wärmeaustausch mit dem Kaltfinger (2) steht;
- eine Detektoreinheit, die mindestens eine Detektorschaltung umfasst, die gegenüber dem zu erkennenden infraroten Wellenlängenspektrum empfindlich ist und in direktem oder indirektem Wärmeaustausch mit dem Kältefeld (4) steht;
- ein Kälteschild, das mechanisch befestigt ist und in Wärmeaustausch mit dem Kältefeld (4) steht und in der Lage ist, die Störstrahlung zu begrenzen, mit einer Drehachse;
***dadurch gekennzeichnet, dass*** die Innenwand (10), die den Kälteschild (6) begrenzt, eine Reihe von Reliefs (12) aufweist, die entlang mindestens einer Schraublinie (11) verteilt sind, deren Definitionsachse mit der Drehachse des Kälteschildes (6) zusammenfällt.

2. Infrarotdetektor gemäß Anspruch 1, ***dadurch gekennzeichnet,* dass** jedes der Reliefs (12) eine Kante enthält, die nicht senkrecht zur Richtung dieser Drehachse liegt.

3. Infrarotdetektor gemäß einem der Ansprüche 1 und 2, ***dadurch gekennzeichnet, dass*** die Ganghöhe der Schraubenlinie(n) (11) konstant oder variabel ist.

4. Infrarotdetektor gemäß einem der Ansprüche 1 bis 3, ***dadurch gekennzeichnet, dass*** das Kälteschild (6) durch Galvanisieren von Nickel oder Kupfer auf einer Matrix, die geeignet ist, um das gewünschte Profil zu definieren, hergestellt wird.

## Claims

1. An infrared radiation detector comprising:
- a cryostat (1) equipped with a cold finger (2) capable of ensuring heat exchange with a cold source and a window (3) that is transparent to the infrared radiation that is to be detected;
- a mechanically fixed cold plane (4) that is in heat exchange with the cold finger (2);
- a detector unit (5) comprising at least a detector circuit that is sensitive to the infrared wavelength range that is to be detected and which is in direct or indirect heat exchange with the cold plane (4);
- a mechanically fixed cold shield (6) that is in heat exchange with the cold plane (4) and capable of limiting any stray radiation and has one axis of revolution;
wherein the internal wall (10) that defines cold shield (6) has a succession of reliefs (12) distributed in at least one helical pattern (11), the definition axis whereof coincides with the axis of revolution of the shield (6).

2. The infrared radiation detector as claimed in claim 1, wherein each relief (12) has an edge that is not perpendicular to the main direction of said axis of revolution..

3. The infrared radiation detector as claimed in either claim 1 or 2, wherein the pitch of helix or helixes (11) is constant or variable.

4. The infrared radiation detector as claimed in any of claims 1 to 3, wherein the cold shield (6) is produced by electrically depositing nickel or copper on a mold capable of defining the desired profile.
